# EUROPEAN PATENT SPECIFICATION

(11) **EP 3 001 184 B1**
(45) Date of publication and mention of the grant of the patent: **25.03.2020**
(21) Application number: 14795283.2
(22) Date of filing: 07.05.2014
(51) Int. Cl.: G01N 21/77, G01N 31/22, G01N 21/78

(54) **PASSIVE DEVICE FOR THE DETECTION AND/OR DETERMINATION IN SITU OF AMINES IN GASES**
PASSIVE VORRICHTUNG ZUM NACHWEIS UND/ODER ZUR IN SITU BESTIMMUNG VON AMINEN IN GASEN
DISPOSITIF PASSIF POUR LA DÉTECTION ET/OU LA DÉTERMINATION IN SITU D'AMINES DANS DES GAZ

(30) Priority: 07.05.2013 ES 201300436
(43) Date of publication of application: 30.03.2016
(73) Proprietor: Universitat de Valéncia, 46010 Valencia (ES)
(72) Inventor: CAMPINS FALCO, Pilar, E-46010 Valencia (ES); MOLINER MARTINEZ, Yolanda, E-46010 Valencia (ES); HERRAEZ HERNANDEZ, Rosa, E-46010 Valencia (ES); MOLINS LEGUA, Carmen, E-46010 Valencia (ES); VERDU ANDRES, Jorge, E-46010 Valencia (ES); JORNET MARTINEZ, Neus, E-46688 Polinya de Xuquer, Valencia (ES)
(74) Representative: Elzaburu S.L.P.
(86) International application number: PCT/ES2014/000077
(87) International publication number: WO 2014/181012

(56) References cited:
- WO-A1-2008/003999
- ES-T3- 2 339 368
- US-A- 4 840 919
- IN SUNG PARK ET AL: "Colorimetric detection of aliphatic primary amines and a molecular logic gate based on a photochromic phenoxyquinone derivative", JOURNAL OF PHOTOCHEMISTRY AND PHOTOBIOLOGY, A: CHEMISTRY., vol. 238, 1 June 2012 (2012-06-01), pages 1-6, XP055294797, CH ISSN: 1010-6030, DOI: 10.1016/j.jphotochem.2012.04.003
- SUTARLIE L ET AL: "Colorimetric responses of transparent polymers doped with metal phthalocyanine for detecting vaporous amines", SENSORS AND ACTUATORS B: CHEMICAL: INTERNATIONAL JOURNAL DEVOTED TO RESEARCH AND DEVELOPMENT OF PHYSICAL AND CHEMICAL TRANSDUCERS, ELSEVIER BV, NL, vol. 134, no. 2, 25 September 2008 (2008-09-25), pages 1000-1004, XP025430003, ISSN: 0925-4005, DOI: 10.1016/J.SNB.2008.07.011 [retrieved on 2008-07-23]
- MOLINER-MARTINEZ ET AL: "A method for the determination of dimethylamine in air by collection on solid support sorbent with subsequent derivatization and spectrophotometric analysis", JOURNAL OF CHROMATOGRAPHY A, ELSEVIER, AMSTERDAM, NL, vol. 1059, no. 1-2, 3 December 2004 (2004-12-03), pages 17-24, XP005003905, ISSN: 0021-9673, DOI: 10.1016/J.CHROMA.2004.10.021
- SUNG PARK ET AL.: 'Colorimetric detection of aliphatic primary amines and a molecular logic gate based on a photochromic phenoxyquinone derivative' JOURNAL OF PHOTOCHEMISTRY AND PHOTOBIOLOGY A: CHEMISTRY vol. 238, 01 June 2012, pages 1 - 6, XP055294797 DOI: 10.1016/J.JPHOTOCHEM.2012.04.003
- MOLINER-MARTÍNEZ AND. ET AL.: 'A method for the determination of dimethylamine in air by collection on solid support sorbent with subsequent derivatization and spectrophotometric analysis' JOURNAL OF CHROMATOGRAPHY A vol. 1059, no. 1-2, 03 December 2004, pages 17 - 24, XP005003905 DOI: 10.1016/J.CHROMA.2004.10.021

## Description

### Field of the invention

The invention falls within the field of the detection and/or determination in situ of amines in gases, and relates to a passive, simple and inexpensive device for implementing said estimation. The device is capable of acting as a passive colorimetric sensor in the detection of volatile amines, both primary and secondary, and is also capable of discriminating between amines according to the colour obtained.

### Prior art

In recent years, nitrogen compounds such as ammonia and aliphatic amines have been become significant pollutants due to the toxic and odorous characteristics thereof. Aliphatic amines found in air in considerable concentrations are the result of the extensive use thereof by the chemical industry, in which said compounds are applied in the manufacture of raw materials or intermediate products for the preparation of fertilisers, pesticides, surfactants, pharmaceuticals, polymers, colourants, etc.

Amines, in general, are pollutants to be taken into consideration due to the fact that they react very easily in the presence of nitrous acid or other nitrogen compounds producing nitrosamines. Nitrosamines are responsible for causing cancer in a large number of animal species. In the case of humans, current studies show a direct correspondence between nitrosamines and the risk of suffering from cancer. In this way, aliphatic amines are known as potent precursors of carcinogenic substances and the determination and control thereof is crucial. All of this has caused a growing social awareness regarding the dangers to health that the presence of amines in air poses, directing many research studies towards the search for reliable detection methods for the monitoring thereof in the environment, especially in locations prone to having volatile amines in unadvisable quantities, such as purifiers, agrochemical industries and others.

Amines have properties such as high volatility and polarity, they are chemically unstable and, in addition, do not have ultraviolet absorbance or fluorescence emission. In order to provide a solution to the problem of the detection thereof, there are various methods that propose converting the amines into a more stable product, which can be detected, by way of a derivatisation agent. The derivatisation allows low quantities of amines to be detected by way of a secondary reaction to form the derivative detectable in mild reaction conditions [1]. There are many derivatisation agents used for detecting aliphatic amines, such as ortho-phthalaldehyde (OPA), dinitrofluorobenzene (DNFB), ninhydrin, fluorescamine, halogen benzofuran and 1,2 naphthoquinone-4-sulfonate (NQS) [2, 3a-b].

The derivatisation step has been and is widely used as a method for increasing the limit of detection (LOD) in different techniques such as gas chromatography, liquid chromatography and UV-vis spectrometry. However, these techniques do not generally allow the detection in situ and in real time.

In the case of determining amines in situ and in real time, one possibility is to use the active sampling technique, which enables the detection to take place in a short time period, although this technique usually depends on an external energy source, which involves the need for specific equipment for the sampling and in some cases, an energy cost to be taken into account. For example, the commercial colorimetric tubes [4] have the drawback of low reproducibility and therefore the low accuracy thereof. Another example of an active sampler would be the EFS-C18 cartridges derivatised with NQS [5], in which the derivatisation agent is anchored (not embedded) in the solid medium, and therefore they require a costly conditioning, washing and elution process of the cartridge. These systems reach LODs of 3.2 and 1.1 mg/m³, considering 15 and 60 minutes respectively as the sample time at 30 ml/min. Lastly, other active sensors of amines in the air act by doping polymers such as PDMS, PVA or NOA65 with metalloporphyrins and making an active sampling in quantities of 11000 ppmv [6], concentrations significantly above the concentrations in the real atmosphere and the concentrations established by legislation.

Alternatively, the passive sampling technique, although generally requiring greater exposure times, does not require an external energy source, or the execution of specific tasks by the personnel, whereby the energy cost is zero and it improves the simplicity and applicability of the sensor. These types of passive sensors are recommended for many specific applications; therefore the availability thereof is of interest.

As an example of a passive sensor, a phenoquinone supported by PDMS, which acts as a colorimetric and fluorometric photo-induced sensor, is described in [7]. However, this sensor requires prior photoinduction by means of UV light to produce the "ana"-quinone derivative, and also only detects very large quantities of amines, to the order of g/ml, therefore it does not have a practical application in real atmospheres. Similarly, a gas dosimeter batch utilising a 1,2-naphthoquinone-4-sulfonic acid (NQSA) derivative (e.g. the sodium salt thereof) as colorimetric reagent for the determination of amines in solution or air is disclosed in [8]. The reagent is applied dropwise to a carrier medium such as a thin paper-like strip and then allowed to dry, before covering carrier and reagent with a porous membrane layer against the effects of wind, moisture and UV radiation on the reagent.

Hitherto, no passive sensors of amines in air for determination in situ are known that have LODs suitable for determination in real atmospheres, that is to say, with low amine concentrations. Compared to other passive amine sensors previously described, the proposed sensor clearly improves the sensitivity, enabling the detection of amines at very low concentrations. In addition, compared with other devices with colorimetric response, such as for example more common commercial colorimetric tubes (active sensors, with use of manual pumps), the present sensor reaches the same level of concentration with improved accuracy.

Lastly, in the case of specifying the quantification of amines, said quantification can be carried out by way of direct measurement of the diffuse reflection of the sensors.

### Brief description of the figures

Figures 1a and 1b. Representation of the absorbance values as a function of the wavelength (Figure 1a) for each amine: a) methylamine, b) dimethylamine, c) ethylamine and d) diethylamine; with an amine concentration of 2.25 µg/cm³ and exposure time of 1 hour; and photograph of the corresponding sensors (Figure 1b).
Figures 2a and 2b. Representation of the absorbance values as a function of the wavelength (Figure 2a) for different concentrations of methylamine (in mg/m³): a): 0, b): 5, c): 10, d): 20, e): 50, for an exposure time of 8 hours; and photograph of the corresponding sensors (Figure 2b).
Figures 3a and 3b. Representation of the absorbance values as a function of the exposure time of the sensor (Figure 3a) for a methylamine concentration of 50 mg/cm³ and a wavelength of 580 nm; and photograph of the corresponding sensors (Figure 3b).
Figures 4a and 4b. Representation of the absorbance values as a function of the dimethylamine concentration (Figure 4a) (mg/m³): a): 0, b): 10, c): 20, d): 50 for a wavelength of 580 nm; and photograph of the corresponding sensors (Figure 4b).

Figures 5a and 5b. Representation of the absorbance at a wavelength of 580 nm (Figure 5a) for 6 devices of each synthesis, up to a total of 4 syntheses that were carried out following the same experimental protocol; and photograph showing the 6 devices of one of the syntheses (Figure 5b).

### Detailed description of the invention

Therefore, an object of the present invention is to provide a passive colorimetric sensor for the detection in situ of amines in gaseous form, and in particular in air, which does not suffer from the previously stated defects and, in particular, is aimed at providing a colorimetric sensor that has limits of detection lower than the ones known at present for these types of sensors, such that it may be used in the detection of amines in real atmospheres.

This problem has been resolved as the inventors found that, by soaking a derivatisation reagent, 1, 2 naphthoquinone-4-sulfonate (NQS), in an absorbent matrix with a polydimethylsiloxane (PDMS) base, it is possible to obtain a colorimetric-type amine detector, that is to say, an amine sensor that does not consume energy, and also has sufficiently low limits of detection so as to enable the detection thereof and possible quantification in real atmospheres. According to the inventors, the invention is based on the fact that, in the presence of amines, the NQS sulphate group is eliminated, being bonded to the amine and producing a highly chromogenic product, according to the following reaction:

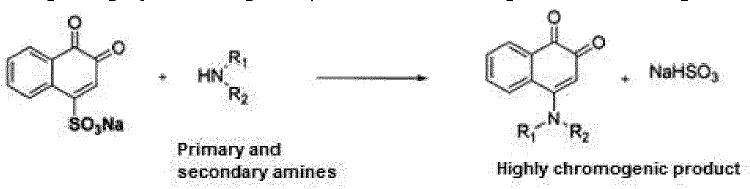

Thus in a first aspect, the invention is aimed at a passive colorimetric sensor of aliphatic amines with a LOD range suitable for detection and quantification in real atmospheres, according to claim 1. The sensor is based on a derivatisation reagent, NQS, embedded in PDMS as absorbent matrix. This device acts as a passive colorimetric sensor in the detection of volatile amines with an LOD of up to 3 mg/m³.

In a second aspect, the invention is aimed at a manufacturing process of the sensor according to claim 6, which is based on incorporating the NQS in a solid support of PDMS. The manufacturing method comprises the following steps:
a) dissolving the NQS in a solvent; in one embodiment the solvent is chloroform or ethanol.
b) adding the PDMS to the solution from step a), stirring if necessary until a homogenous mixture is obtained;
c) pouring the solution obtained in step b) into a mould; and
d) once the solution from step c) has solidified, removing the resulting sheet from the mould, which is the sensor.

Once the NQS is supported in the PDMS, unlike other sensors described in the literature, it does not require any kind of pre-treatment or an external source or instrument for the sensor to be able to carry out its function. Furthermore, owing to the properties of the PDMS, the NQS is stabilised, highlighting the harmlessness of the resulting sensor to the environment, the stability thereof over a wide range of temperatures and resistance to reversion, the stability thereof with respect to humidity owing to the low water absorption and the good resistance thereof to solar radiation, thereby preventing the degradation and loss of the function thereof as a derivatisation agent.

The sensor, produced in this way, can be used in the detection and/or quantification of amines in gases, in particular in the air, and more particularly in atmospheric air, in which the detection is carried out in situ and in real time by means of the passive sampling technique.

In one embodiment, the PDMS used is a silicone elastomer based on polydimethylsiloxane such as dimethyl-hydrogenmethyl siloxane marketed under the commercial brand Sylgard 184®, which is one of the most elastic and active polymers and there are multiple applications thereof indicated in the bibliography. The easy preparation, zero toxicity, the malleability and the thermal and electrical stability thereof are relevant characteristics of this material. The chemical properties thereof enable the rapid diffusion of the analytes through the sensor described.

### Experimental examples

### Example 1: Optimisation of the sensors

As has been mentioned, the design of the sensors is based on the incorporation of NQS in the PDMS gel. The synthesis was optimised by varying the solvent for NQS and varying the concentration of NQS. Different thicknesses and shapes were also tested for the device.

In the optimisation process, three different solvents were tested: water, ethanol and chloroform. In the case of water, a loss of colour of the NQS was produced and large bubbles were formed, which prevented good homogenisation and the compaction of the gel required for it to solidify. These bubbles did not disappear after 1 hour in a vacuum chamber, or after heating for a period of time. In the case of ethanol and chloroform, the gelification was homogenous and there were no bubbles. In the case of using chloroform, it was necessary to sonicate for 5 minutes; however, the gel was obtained in less time and was more uniform.

Another variable that was optimised was the quantity of NQS; with a greater quantity, responses with greater sensitivity were obtained up to a saturation quantity. The most suitable range of NQS concentration values was 0.43 to 0.46 mg NQS/g PDMS.

The dimensions of the sensor were also optimised, different thicknesses of the sensor being tested and, for this, using different recipients to form the gel. The thickness of the sheet formed was the most important parameter. Thicknesses of between 2.5 and 0.8 cm were tested. With thicknesses lower than 1.0 cm, no colour change was observed. The best results obtained in terms of the reproducibility thereof and easy handling of the devices were obtained in a thickness range of 1.0 to 1.5 cm. In terms of the surface area of the sheet, the easiest sensors to handle and in turn sufficiently large to be able to see the colour change with the naked eye were obtained with surface areas between 1.0 and 3.0 cm².

### Example 2: Preparation of optimised sensors

The elastomer of PDMS (SYLGARD base) (13.6 g) was added to a solution of sodium 1,2 naphthoquinone-4-sulfonate (6.8 mg) in chloroform (0.35 ml) and left under vigorous stirring until a uniform mixture was obtained (30 mins). Then, the polymerisation agent (SYLGARD 184) (1.36 g) was added and sonicated for a few minutes. The resulting gel was deposited on a plate of 8 wells (of the type commonly used for cell cultures) with a 1.5 cm diameter and 1.2 cm depth, where it was left for two days at room temperature in darkness with the aim of obtaining 1,2-naphthoquinone-4-sulfonate embedded in PDMS. Once the gel solidified, forming a film, it was removed from the wells, thereby obtaining each one of the devices ready for the use thereof.

### Example 3: Producing gaseous amine patterns

In order to evaluate the response of the devices to amines it was necessary to determine the conditions for producing the amine atmosphere to be detected by the sensor, that is to say, produce amine patterns in air. For this work, a method previously developed by the inventors was used, where the amine atmosphere is produced by adding a basic solution (NaOH) to the amine solution.

For this, once the amine solutions of known a concentration were prepared, 5 µl of solution of NaOH 10 M was added in a vial of 20 ml, the sensor to be tested was introduced within said atmosphere, the vial was covered and 5 µl of the amine solution was added using a syringe by way of a septum. Once the corresponding sampling time had lapsed, the sensor was removed and the analyte response of the same was measured by diffuse reflection according to the amine concentration.

### Example 4: Evaluation of the response of the sensor to amines

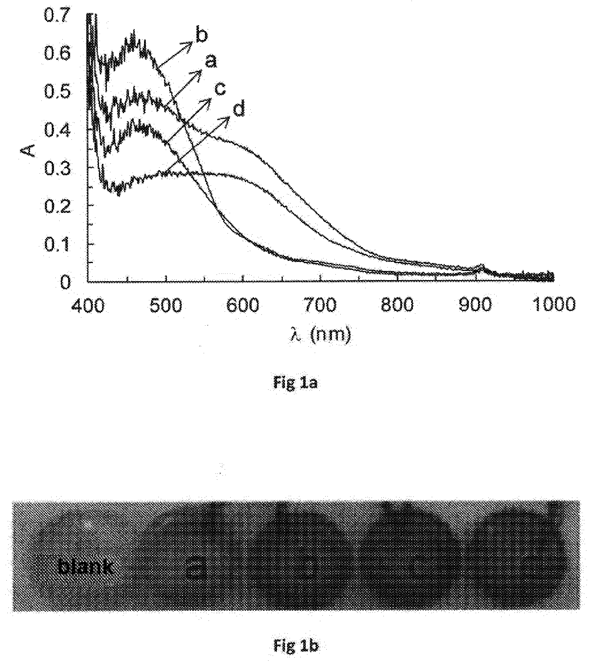

The results obtained using the device obtained by means of the method described in Example 2 show that by using different amines (methylamine, ethylamine, dimethylamine and diethylamine) in concentrations of 2.25 µg/cm³ and exposure time of 1 hour at room temperature, the analytical responses were different for each amine. Figure 1 shows an image of the derivatives formed for each one of the amines. It may be observed with the naked eye that the different amines have different tones; the dimethylamine and the diethylamine have orange tones while the methylamine and ethylamine have brown and grey tones. In this way, the response is selective for each one of the amines in a qualitative manner. Furthermore, the diffuse reflection signal obtained (Figure 1) provides a quantitative measure of the presence of amines in a specific atmosphere.

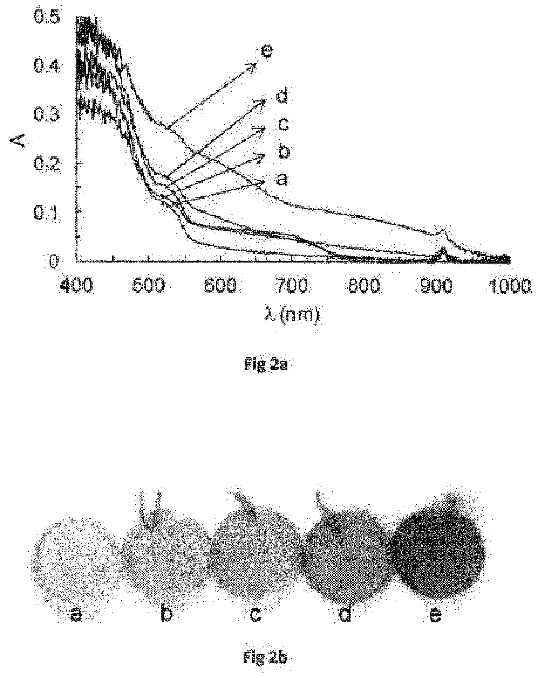

By way of example, the graphs of Figure 2 show the variation of the response of the sensor as a function of the wavelength for different concentrations of methylamine in air. As can be observed, the quantification of the amine concentration in a specific atmosphere can be carried out by direct measurement of the sensor exposed to said atmosphere, without the need for any reagent or sample preparation step.

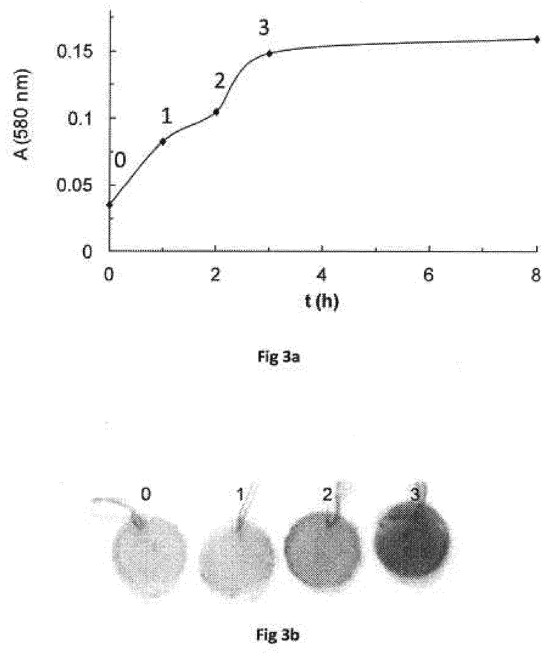

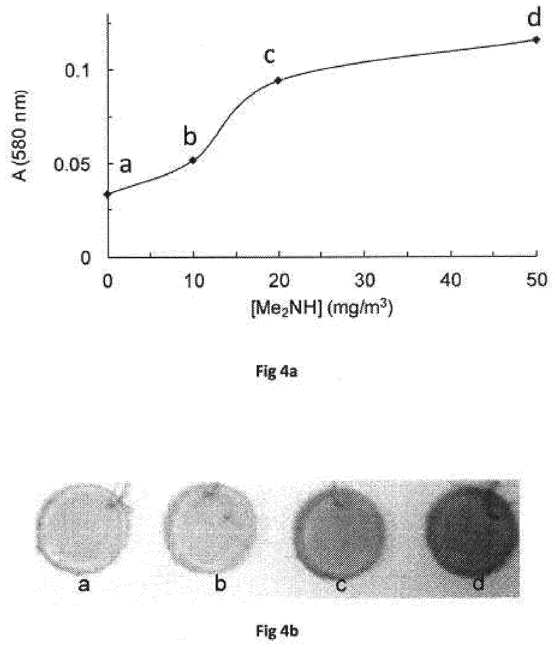

The increase in sensitivity of this sensor is achieved by increasing the exposure time. By way of example, in Figure 3 the increase in sensitivity along with the exposure time is shown for methylamine. The results obtained showed that the sensor enables concentrations of amines from 3 mg/m³ to be detected with an exposure time of 5 hours. Consequently, the sensor can be applied in the detection of amines in environments with a concentration range from 3 mg/m³ up to levels of µg/cm³, a level at which the sensor is saturated (Figure 4).

### Example 5: Reproducibility of the sensor and stability

In order to evaluate the reproducibility of the sensor, four different syntheses were carried out, following, in all of these, the synthesis method described in Example 2. Six devices of each one of the syntheses were taken and the diffuse reflection thereof was measured.

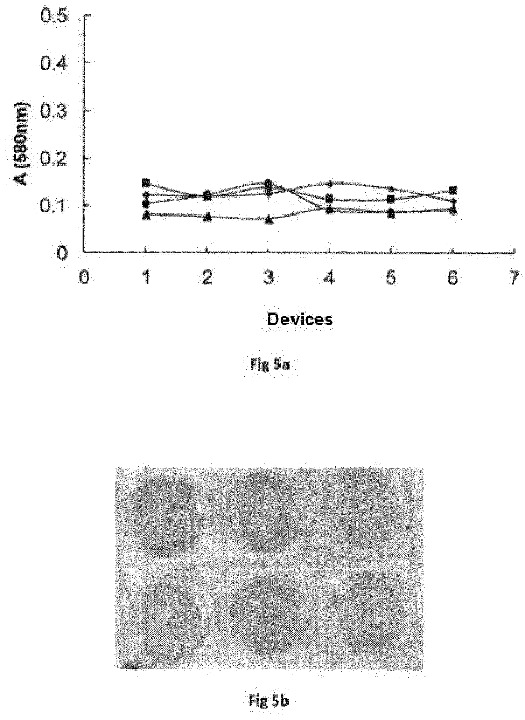

The analytical signal of each one of the synthesised sensors was measured on both faces of the sensor. The signal from the blank sample was subtracted from each measurement and the two most significant wavelengths were taken as a reference. Figure 5 shows the analytical responses obtained for six sensors of 4 different syntheses. As can be seen, there was no significant variation in the different synthesised sensors, which means that the reproducibility of the devices is excellent. In fact, it can be seen with the naked eye that all the devices obtained by different syntheses have the same homogenous colour on both faces.

Furthermore, the sensors are shown be to exceptionally stable with time, whereby they can be used long after they have been prepared without the need for any type of treatment. Similarly, as the inventors have proven, the response thereof to the presence of amines is also stable over time.

### Bibliography

[1] AnaliX, 2 (1011), Derivatization and separation aliphatic amine.
[2] A. Fekete, A.K. Malik, A. Kumar, P. Schmitt-Kopplin. Anal Chem. 40 (2010) 102.
[3] a) A. A. Elbashir, A. A. Ahmed, S. A. A. Ahmed, S. M. A. Ahmed, H. Y. Aboul-Enein 47 (2012) 219. b) P. Campins-Falcó, C. Molina-Legua, A. Sevillano-Cabeza, R. Porras-Serrano, Analyst 122 (1997) 673.
[4] RAE Systems, Gas Detection Tube Data Sheet. Amines. No 10-132-10 (http://www.raesystems.com/products/colormetric-gas-detection-tubes)
[5] Y. Moliner-Martinez, P. Campíns-Falcó, R. Herraez-Hernandez. J. Chromatogr. A 1059 (2004) 17-24.
[6] Sensors and Actuators B 134 (2008) 1000-1004
[7] Journal of Photochemistry and photobiology A: Chemistry 238 (2012) 1-6.
[8] A. J. Attar, US Patent No. 4,840,919 (1989)

## Claims

1. A passive colorimetric sensor for the detection and/or determination of aliphatic amines in atmospheric air, which comprises the compound 1,2-naphthoquinone-4-sulfonate (NQS) embedded in a polydimethylsiloxane (PDMS) matrix.

2. The sensor according to claim 1, wherein the PDMS is dimethyl-hydrogenmethylsiloxane.

3. The sensor according to any one of claims 1 or 2, wherein the NQS is embedded in the PDMS in a concentration of between 0.43 and 0.46 mg NQS/g PDMS.

4. The sensor according to any one of the preceding claims, wherein the PDMS matrix is a sheet with a thickness of between 1.0 and 1.5 cm.

5. The sensor according to claim 4, wherein the sheet has an area of between 1.0 and 3.0 cm².

6. A manufacturing method of a passive colorimetric sensor for aliphatic amines in atmospheric air, which comprises the steps:
a) dissolving the NQS in a solvent;
b) adding PDMS to the solution from step a), stirring if necessary until a homogenous mixture is obtained;
c) pouring the solution obtained in step b) into a mould; and
d) once the solution from step c) has solidified, removing the resulting sheet from the mould, which is the sensor.

7. The manufacturing method of a colorimetric sensor according to claim 6, wherein the solvent is chloroform or ethanol.

8. The manufacturing method of a colorimetric sensor according to any one of claims 6 or 7, wherein the PDMS is a dimethyl-hydrogenmethyl siloxane.

9. The manufacturing method of a colorimetric sensor according to any one of claims 6 to 8, wherein the NQS is added to the PDMS in a concentration of between 0.43 and 0.46 mg NQS/g PDMS.

10. The manufacturing method of a colorimetric sensor according to any one of claims 6 to 9, wherein the mould has a diameter of between 1 and 2 cm and a depth of between 1.0 and 1.5 cm.

11. The manufacturing method of a colorimetric sensor according to any one of claims 6 to 9, wherein the mould is a well plate and each well has a diameter of between 1 and 2 cm and a depth of between 1.0 and 1.5 cm.

## Patentansprüche

1. Passiver kolorimetrischer Sensor zum Nachweis und/oder zur Bestimmung von aliphatischen Aminen in atmosphärischer Luft, der die Verbindung 1,2-Naphthochinon-4-sulfonat (NQS) eingebettet in eine Polydimethylsiloxan-(PDMS)-Matrix umfasst.

2. Sensor nach Anspruch 1, wobei das PDMS Dimethyl-Hydrogenmethylsiloxan ist.

3. Sensor nach einem der Ansprüche 1 oder 2, wobei das NQS im PDMS in einer Konzentration zwischen 0,43 und 0,46 mg NQS/g PDMS eingebettet ist.

4. Sensor nach einem der vorhergehenden Ansprüche, wobei die PDMS-Matrix eine Scheibe mit einer Dicke zwischen 1,0 und 1,5 cm ist.

5. Sensor nach Anspruch 4, wobei die Scheibe eine Fläche zwischen 1,0 und 3,0 cm² aufweist.

6. Herstellungsverfahren eines passiven kolorimetrischen Sensors für aliphatische Amine in atmosphärischer Luft, das die folgenden Schritte umfasst:
a) Auflösen des NQS in einem Lösungsmittel;
b) Hinzufügen von PDMS zu der Lösung aus Schritt a), gegebenenfalls unter Rühren, bis ein homogenes Gemisch erhalten wird;
c) Gießen der in Schritt b) erhaltenen Lösung in eine Form; und
d) nachdem die Lösung aus Schritt c) erstarrt ist, Herausnehmen der entstandenen Scheibe aus der Form, die der Sensor ist.

7. Herstellungsverfahren eines kolorimetrischen Sensors nach Anspruch 6, wobei das Lösungsmittel Chloroform oder Ethanol ist.

8. Herstellungsverfahren eines kolorimetrischen Sensors nach einem der Ansprüche 6 oder 7, wobei das PDMS ein Dimethyl-Wasserstoffmethyl-Siloxan ist.

9. Herstellungsverfahren eines kolorimetrischen Sensors nach einem der Ansprüche 6 bis 8, wobei das NQS dem PDMS in einer Konzentration zwischen 0,43 und 0,46 mg NQS/g PDMS hinzugefügt wird.

10. Herstellungsverfahren eines kolorimetrischen Sensors nach einem der Ansprüche 6 bis 9, wobei die Form einen Durchmesser zwischen 1 und 2 cm und eine Tiefe zwischen 1,0 und 1,5 cm aufweist.

11. Herstellungsverfahren eines kolorimetrischen Sensors nach einem der Ansprüche 6 bis 9, wobei die Form eine Platte mit Vertiefungen ist und jede Vertiefung einen Durchmesser zwischen 1 und 2 cm und eine Tiefe zwischen 1,0 und 1,5 cm aufweist.

## Revendications

1. Un capteur passif colorimétrique pour la détection et/ou détermination d'amines aliphatiques dans l'air ambiant, qui comprend le composé 1,2-naphthoquinone-4-sulfonique (NQS) intégré dans une matrice de polydiméthylsiloxane (PDMS).

2. Le capteur selon la revendication 1, dans lequel le PDMS est le diméthyl-hydrogénométhylsiloxane.

3. Le capteur selon l'une des revendications 1 ou 2, dans lequel le NQS est intégré dans le PDMS à une concentration comprise entre 0,43 et 0,46 mg NQS/g PDMS.

4. Le capteur selon l'une des revendications précédentes, dans lequel la matrice PDMS est une feuille ayant une épaisseur comprise entre 1,0 et 1,5 cm.

5. Le capteur selon la revendication 4, dans lequel la feuille a une surface comprise entre 1,0 et 3,0 cm²

6. Un procédé de fabrication d'un capteur passif colorimétrique pour les amines aliphatiques dans l'air ambiant, qui comprend les étapes :
a) dissolution du NQS dans un solvant ;
b) ajout du PDMS à la solution de l'étape a), en remuant si nécessaire jusqu'à l'obtention d'un mélange homogène 25 ;
c) déversement de la solution obtenue à l'étape b) dans un moule ; et
d) une fois que la solution de l'étape c) s'est solidifiée, retirer la feuille résultante du moule, qui est le capteur.

7. Le procédé de fabrication d'un capteur colorimétrique selon la revendication 6, dans lequel le solvant est le chloroforme ou l'éthanol.

8. Le procédé de fabrication d'un capteur colorimétrique selon l'une des revendications 6 ou 7, dans lequel le PDMS est un diméthyl-hydrogénméthylsiloxane.

9. Le procédé de fabrication d'un capteur colorimétrique selon l'une des revendications 6 à 8, dans lequel le NQS est ajouté au PDMS à une concentration comprise entre 0,43 et 0,46 mg NQS/g PDMS.

10. Le procédé de fabrication d'un capteur colorimétrique selon l'une des revendications 6 à 9, dans lequel le moule a un diamètre compris entre 1 et 2 cm et une profondeur comprise entre 1,0 et 1,5 cm.

11. Le procédé de fabrication d'un capteur colorimétrique selon l'une des revendications 6 à 9, dans lequel le moule est une plaque à puits et chaque puits a un diamètre compris entre 1 et 2 cm, et une profondeur comprise entre 1,0 et 1,5 cm.
